# EUROPEAN PATENT APPLICATION

(11) **EP 3 327 567 A1**
(43) Date of publication of application: **30.05.2018**
(21) Application number: 17159270.2
(22) Date of filing: 03.03.2017
(51) Int. Cl.: G06F 9/44

(54) **A METHOD AND A SYSTEM FOR DETERMINING REQUIREMENTS FOR A PROJECT**

(30) Priority: 28.11.2016 IN 201641040618
(71) Applicant: Wipro Limited, 560 035 Karnataka (IN)
(72) Inventor: CHANDRA, Aman, Bangalore-37 (IN); VENKATARAMAN, Arthi, 560047 Bangalore (IN); PATTER, Arvind, Bangalore-100 (IN); ANANT, Varun, Bangalore - 37 (IN)
(74) Representative: Finnegan Europe LLP

(57) **Abstract**

The present disclosure is related in general to artificial intelligence and a method and system for determining requirements for a project. A requirement determination system provides predefined questions associated with predefined requirement targets of the project to computing devices upon detecting availability of end users and assigns a score to each response received in response to the predefined questions. Further, the system detects completion of the predefined requirement targets by comparing the score assigned to each response with a unique predefined threshold score. The system aggregates the responses for determining the requirements of the project. The system may be available at any point of time to interact with the end users based on their availability and convenience, thereby providing significant flexibility to end users who are geographically distributed. The system is capable of conducting multiple one-to-one interaction sessions with the end users simultaneously which ensures privacy to each end user.

## Description

### Technical Field

The present subject matter relates generally to artificial intelligence, and more particularly, but not exclusively, to a method and a system for automatically determining one or more requirements for a software development project or a hardware project.

### Background

The requirements determining phase is a foremost and a critical phase in the Software Development Life Cycle (SDLC). The requirement determining phase plays a major role in achieving the final outcome of a project. The requirement determining phase involves conducting a discussion and receiving inputs from multiple stakeholders associated with the project. The inputs received from the stakeholders are documented, prioritized and validated to determine requirements for the project. Furthermore, the multiple stakeholders providing the inputs may be geographically distributed which creates a strong dependency on availability of the stakeholders and analysts to carry out the discussion. Due to maximum human intervention involved in the requirement development phase, there may exist some errors when the requirements are gathered such as the requirements may be ambiguous, incomplete, vague, conflicting, volatile etc.

Due to these errors, quality of requirements which is an important factor in deciding final outcome of the project is significantly affected leading to poor development of the project. Therefore, compromising on the requirement determining phase may give rise to faults during development of the project which may demand excess time and resources as complexity of the faults occurring in development phase of the project is high.

Therefore, existing techniques utilize Artificial Intelligence (AI) techniques to minimize human intervention by offering several tools/ techniques to automate some portion of the requirement determining phase. AI is a field of computer science, which attempts to build computational methods for actions that are measured to require intelligence when performed by humans. The main contribution of AI in the requirements engineering phase may be in the areas of disambiguating natural language requirements, developing knowledge based systems and ontology to manage the requirements and solving problems associated with requirements such as incompleteness and prioritization. However, the existing techniques do not follow a structured and disciplined method for determining requirements via AI techniques due to which, the problems of ambiguity, prioritization, completeness etc. still persist.

### Summary

One or more shortcomings of the prior art are overcome and additional advantages are provided through the present disclosure. Additional features and advantages are realized through the techniques of the present disclosure. Other embodiments and aspects of the disclosure are described in detail herein and are considered a part of the claimed disclosure.

Disclosed herein are a method and a system for determining one or more requirements for a project. The method comprises detecting, by a requirement determination system, availability of one or more end users through one or more computing devices for participating in a session related to requirements determination for a project. The one or more computing devices are associated with the one or more end users. Further, the requirements determination system provides one or more predefined questions associated with one or more predefined requirement targets of the project to the one or more computing devices upon detecting the availability of the one or more end users. Upon providing the one or more predefined questions, the requirement determination system assigns a score to each of one or more responses received from the one or more computing devices in response to the one or more predefined questions based on one or more content-based parameters. Further, the requirement determination system compares the score assigned to each of the one or more responses with a unique predefined threshold score associated with each of the one or more predefined requirement targets. Furthermore, the requirement determination system detects completion of the one or more predefined requirement targets based on the comparison. Finally, the requirement determination system aggregates the one or more responses received from the one or more computing devices for determining one or more requirements of the project based on one or more aggregation-based parameters upon detecting the completion of the one or more predefined requirement targets.

Further, the present disclosure comprises a requirement determination system for determining one or more requirements for a project. The requirement determination system comprises a processor and a memory communicatively coupled to the processor. The memory stores the processor-executable instructions, which, on execution, causes the processor to detect availability of one or more end users through one or more computing devices for participating in a session related to requirements determination for a project. The one or more computing devices are associated with the one or more end users. Further, the processor provides one or more predefined questions associated with one or more predefined requirement targets of the project to the one or more computing devices upon detecting the availability of the one or more end users. Upon providing the one or more predefined questions, the processor assigns a score to each of one or more responses received from the one or more computing devices in response to the one or more predefined questions based on one or more content-based parameters. Further, the processor compares the score assigned to each of the one or more responses with a unique predefined threshold score associated with each of the one or more predefined requirement targets. Furthermore, the processor detects completion of the one or more predefined requirement targets based on the comparison. Finally, the processor aggregates the one or more responses received from the one or more computing devices for determining the one or more requirements of the project based on one or more aggregation-based parameters upon detecting the completion of the one or more predefined requirement targets.

Further, the present disclosure comprises a non-transitory computer readable medium including instructions stored thereon that when processed by at least one processor causes a requirement determination system to perform operations comprising detecting availability of one or more end users through one or more computing devices for participating in a session related to requirements determination for a project. The one or more computing devices are associated with the one or more end users. The instructions further cause the processor to provide one or more predefined questions associated with one or more predefined requirement targets of the project to the one or more computing devices upon detecting the availability of the one or more end users. The instructions further cause the processor to assign a score to each of one or more responses received from the one or more computing devices in response to the one or more predefined questions based on one or more content-based parameters. Upon assigning the score, the instructions cause the processor to compare the score assigned to each of the one or more responses with a unique predefined threshold score associated with each of the one or more predefined requirement targets. Furthermore, the instructions cause the processor to detect completion of the one or more predefined requirement targets based on the comparison. Finally, the instructions cause the processor to aggregate the one or more responses received from the one or more computing devices for determining one or more requirements of the project based on one or more aggregation-based parameters upon detecting the completion of the one or more predefined requirement targets.

The foregoing summary is illustrative only and is not intended to be in any way limiting. In addition to the illustrative aspects, embodiments, and features described above, further aspects, embodiments, and features will become apparent by reference to the drawings and the following detailed description.

### Brief Description of the Accompanying Diagrams

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
**FIG.1** shows an exemplary architecture for determining one or more requirements for a project in accordance with some embodiments of the present disclosure;
**FIG.2A** shows a detailed block diagram of a requirement determination system for determining one or more requirements for a project in accordance with some embodiments of the present disclosure;
**FIG.2B** shows exemplary representation of one or more predefined requirement targets and one or more predefined sub-requirement targets in accordance with some embodiments of the present disclosure;
**FIG.2C** shows exemplary representation for classifying one or more responses based on level of details and clarity of content in the one or more responses in accordance with some embodiments of the present disclosure;
**FIG.2D** shows an exemplary representation of predefined requirement target "Authentication mechanism" in accordance with some embodiments of the present disclosure;
**FIG.3** shows a flowchart illustrating a method for determining one or more requirements for a project in accordance with some embodiments of the present disclosure; and
**FIG.4** is a block diagram of an exemplary computer system for implementing embodiments consistent with the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### Detailed Description

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the forms disclosed, but on the contrary, the disclosure is to cover all modifications, equivalents, and alternative falling within the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or method.

The present disclosure provides a method and a system for determining one or more requirements for a project. The system i.e. the requirement determination system may initially detect availability of one or more end users through one or more computing devices for participating in a session related to requirements determination for a project. The one or more computing devices are associated with the one or more end users. Detection of the one or more end users indicates that the one or more end users are ready to participate in the session at that point of time. In some embodiments, the requirement determination system may be available at any point of time to interact with the end users based on their availability and convenience, thereby providing significant flexibility to end users who are geographically distributed. The session also provides an opportunity for one-to-one interaction with the end users which ensures privacy and equal importance to each end user. Also, if more than one end user has been detected at the same time, the requirement determination system is capable of simultaneously conducting multiple one-to-one interaction sessions with the one or more end users detected, thereby minimizing dependency on analysts for determining one or more requirements.

Further, during the one-to-one interaction, the requirements determination system provides one or more predefined questions associated with one or more predefined requirement targets of the project to the one or more computing devices. As an example, for a project related to online shopping, one of the predefined requirement targets may be "Payment mechanism". The present disclosure follows a structured and a disciplined method (explained in detail in the below section) of determining requirements by setting and completing each of the one or more predefined requirement targets. Upon providing the one or more predefined questions, the requirement determination system assigns a score to each of one or more responses received from the one or more computing devices in response to the one or more predefined questions based on one or more content-based parameters. As an example, the one or more content-based parameters may include, but not limited to, level of details and clarity of content in the one or more responses received from the one or more computing devices. Further, the requirement determination system compares the score assigned to each of the one or more responses with a unique predefined threshold score associated with each of the one or more predefined requirement targets.

The requirement determination system detects completion of the one or more predefined requirement targets if the score assigned to each of the one or more responses is at least one of equal to or exceeding the unique predefined threshold score. Upon detecting completion of the one or more predefined requirement targets, the requirement determination system aggregates the one or more responses received from the one or more computing devices for determining one or more requirements of the project based on one or more aggregation-based parameters. As an example, the one or more aggregation-based parameters may include, but not limited to, designation of the one or more end users, vocal tone of the one or more end users and vocabulary of the one or more end users.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

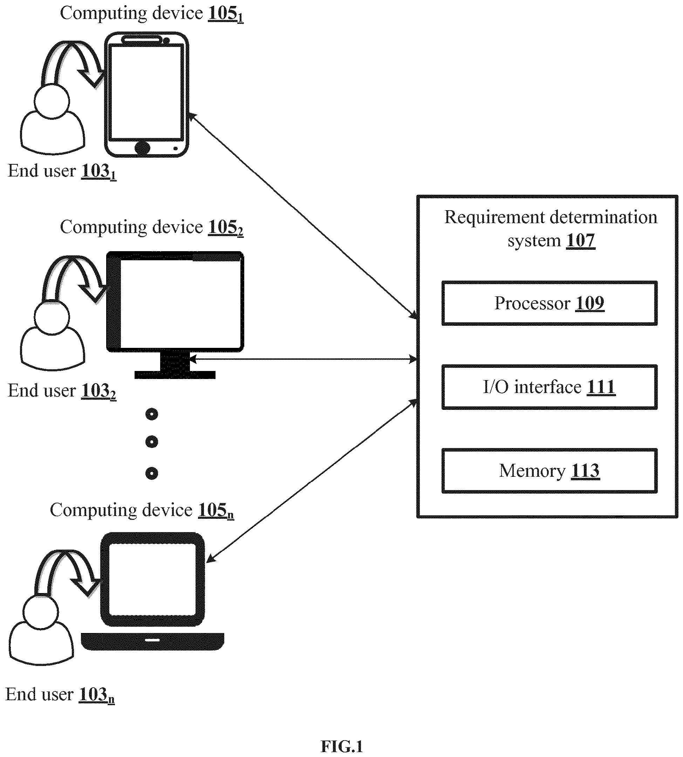

**FIG.1** shows an exemplary architecture for determining one or more requirements for a project in accordance with some embodiments of the present disclosure.

The architecture **100** comprises one or more end users, end user **103₁** to end user **103ₙ** (collectively referred to as one or more end users **103**), one or more computing devices, computing device **105₁** to computing device **105ₙ** (collectively referred to as one or more computing devices **105**), and a requirement determination system **107**. As an example, the one or more end users **103** may include, but not limited to, stakeholders of an organization associated with a project for which one or more requirements may be determined. As an example, the project may include, but not limited to, a software project or a hardware project. The one or more computing devices **105** are associated with the one or more end users **103**. As an example, the one or more computing devices **105** may include, but not limited to, a mobile, a tablet, an e-book reader, a notebook, a laptop, a server and a desktop. The requirement determination system **107** interacts with the one or more end users **103** via the one or more computing devices **105** associated with the one or more end users **103**.

The requirement determination system **107** comprises a processor **109**, an I/O interface **111** and a memory **113**. Through the I/O interface **111** a session invite may be transmitted to the one or more computing devices **105**. The session invite corresponds to a session related to requirements determination for the project which requires active participation of the one or more end users **103**. The one or more end users **103** may accept the session invite and join the session at their time of convenience. The processor **109** detects availability of the one or more end users **103** through the one or more computing devices **105** when the one or more computing devices **105** join the session in response to the session invite being sent and thereby initiates the session. The processor **109** provides one or more predefined questions to the one or more computing devices **105** upon detecting the availability of the one or more end users **103** to receive one or more responses from the one or more computing devices **105**. The one or more predefined questions are associated with one or more predefined requirement targets of the project. The one or more predefined targets and the one or more predefined questions associated with the one or more predefined targets are stored in the memory **113**. The memory **113** is communicatively coupled to the processor **109**. The memory **113** also stores processor-instructions which cause the processor **109** to execute the instructions for determining the one or more requirements of the project based on the one or more responses received from the one or more computing devices **105**.

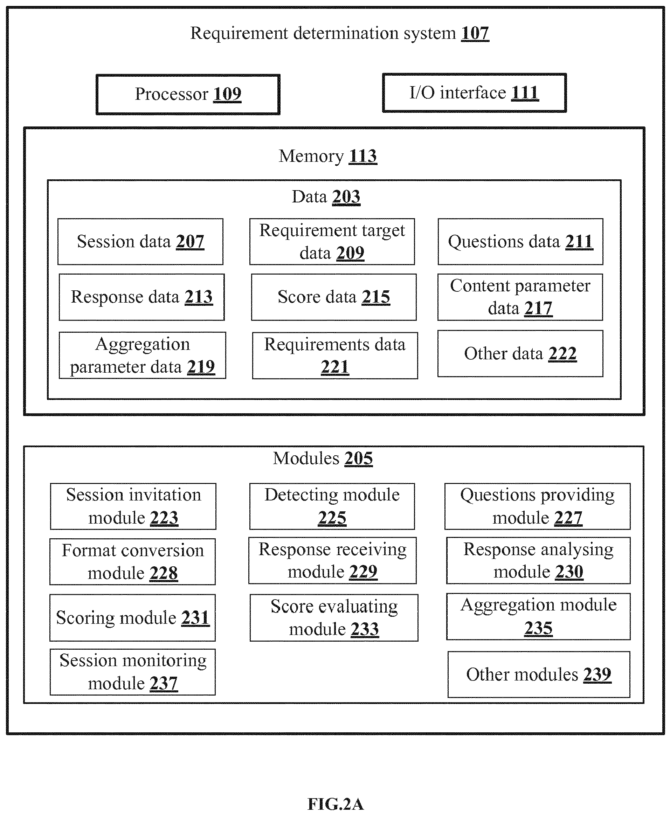

**FIG.2A** shows a detailed block diagram of a requirement determination system determining one or more requirements for a project in accordance with some embodiments of the present disclosure.

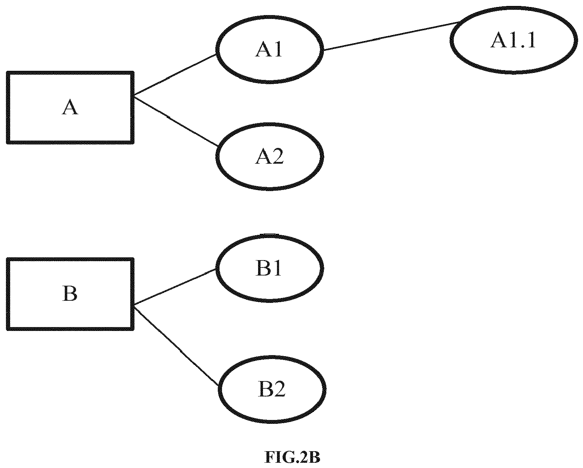

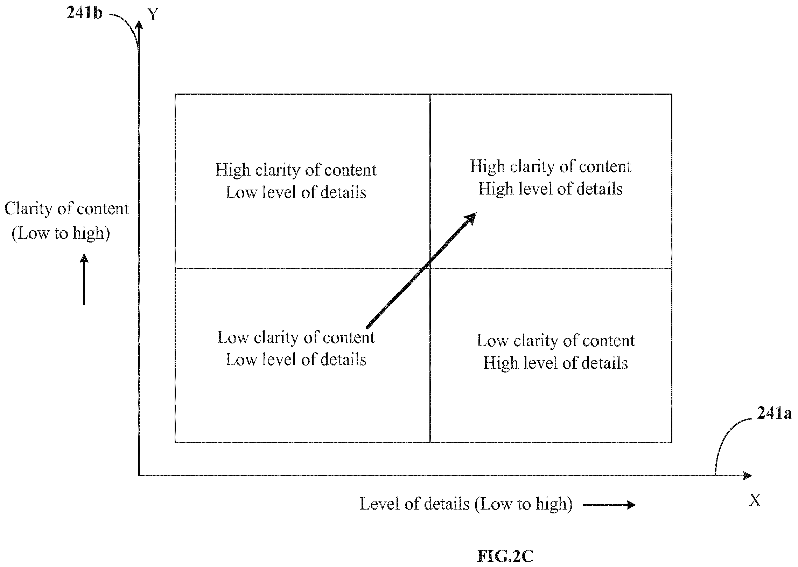

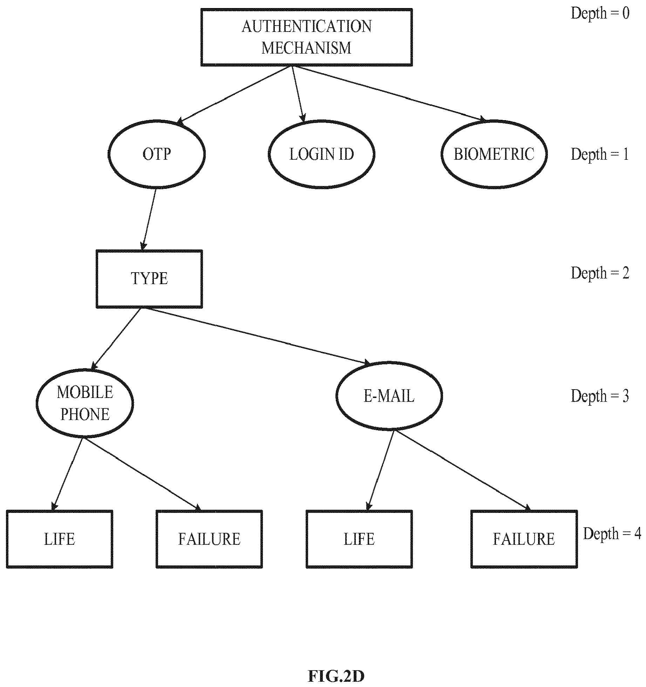

In some implementation, the requirement determination system **107** comprises data **203**. As an example, the data **203** is stored in the memory **113** configured in the requirement determination system **107** as shown in the **FIG.2**. In one embodiment, data **203** includes session data **207**, requirement target data **209**, questions data **211**, response data **213**, score data **215**, content parameter data **217**, aggregation parameter data **219**, requirements data **221** and other data **222**. In the illustrated **FIG.2**, modules **205** are described herein in detail.

In some embodiments, the data **203** may be stored in the memory **113** in the form of various data structures. Additionally, the data can be organized using data models, such as relational or hierarchical data models. The other data **222** may store data, including temporary data and temporary files, generated by modules **205** for performing the various functions of the requirement determination system **107**.

In some embodiments, the session data **207** comprises a session invite and list of one or more end users **103** to whom the session invite may be sent. The session invite corresponds to a session to gather requirements for a project. Further, the session data **207** comprises a predefined time period at which the session may terminate.

In some embodiments, the requirement target data **209** comprises one or more predefined requirement targets of a project. The one or more predefined requirement targets of the project define an expected behaviour of the project. Also, the one or more predefined requirement targets comprise conditions required for completion of the project. The one or more predefined requirement targets may be defined by an analyst associated with the project. Each of the one or more predefined requirement targets may comprise one or more predefined sub-requirement targets. In some non-limiting embodiments, the one or more predefined requirement targets and the one or more predefined sub-requirement targets are represented using a tree data structure as shown in **FIG.2B**. Further, each of the one or more predefined requirement targets are determined to be complete when each of the one or more sub-requirement targets are achieved. In the **FIG.2B**, Nodes A and B are two predefined requirement targets. Nodes A1 and A2 are the predefined sub-requirement targets of the Node A. Node A1.1 is the predefined sub-requirement target of the Node A1. Nodes B1 and B2 are the predefined sub-requirement targets of the Node B. Node A is complete, when the predefined sub-requirement targets A1, A1.1 and A2 are complete. Similarly, Node B is complete, when the predefined sub-requirement targets B1 and B2 are complete.

In some embodiments, the questions data **211** comprises one or more predefined questions associated with the one or more predefined requirement targets of the project, thereby also associated with the one or more predefined sub-requirement targets. As an example, the one or more predefined questions may include, but not limited to, open ended questions, closed ended questions and value based questions. The one or more predefined questions are of type "open ended questions" if response for the one or more predefined questions may be in terms of a free text. The one or more predefined questions are of type "closed ended questions" if response for the one or more predefined questions may be in terms of "Yes" or "No". The one or more predefined questions are of type "Value based questions" if response for the one or more predefined questions may be in terms of a specific value.

In some embodiments, the response data **213** comprises one or more responses received from the one or more end users **103** through the one or more computing devices **105** for the one or more predefined questions shared by the requirement determination system **107**.

In some embodiments, the score data **215** stores a score assigned to each of the one or more responses. Further, the score data **215** comprises a unique predefined threshold score associated with each of the one or more predefined requirement targets. In some embodiments, the unique predefined threshold score is a unique benchmark set/configured for each of the one or more predefined requirement targets. Each of the one or more predefined requirement targets are determined to be complete when they reach their respective unique predefined threshold score.

In some embodiments, the content parameter data **217** comprises one or more content-based parameters based on which the score may be assigned to each of the one or more responses. A content-based parameter is preferably understood to refer to a property of a response that determines or influences a score to be assigned to the response. As an example, the one or more content-based parameters may include, but not limited to, level of details and clarity of content in the one or more responses. As an example, the response containing high level of details and in which the details are clear may be rated with a high score. Similarly, the response containing poor level of details and in which the details are vague or incomplete may be rated with a low score.

In some embodiments, the aggregation parameter data **219** comprises one or more aggregation-based parameters based on which the one or more responses may be aggregated to determine one or more requirements of the project. An aggregation-based parameter is preferably understood to refer to a property of a response that determines whether, or the extent to which, the response defines or represents a requirement of the project. As an example, the one or more aggregation-based parameters may include, but not limited to, designation of the one or more end users **103**, vocal tone of the one or more end users **103** and vocabulary of the one or more end users **103**.

In some embodiments, the requirements data **221** comprises the one or more requirements of the project determined in-line with the one or more predefined requirement targets of the project.

In some embodiments, the data stored in the memory **113** is processed by the modules **205** of the requirement determination system **107**. The modules **205** may be stored within the memory **113**. In an example, the modules **205** communicatively coupled to a processor **109** configured in the requirement determination system **107**, may also be present outside the memory **113** as shown in **FIG.2A** and implemented as hardware. As used herein, the term module refers to an application specific integrated circuit (ASIC), an electronic circuit, a processor (shared, dedicated, or group) and memory that execute one or more software or firmware programs, a combinational logic circuit, and/or other suitable components that provide the described functionality.

In an embodiment, the modules **205** may include, for example, a session invitation module **223**, a detecting module **225**, a questions providing module **227**, format conversion module **228**, a response receiving module **229**, response analysing module **230**, scoring module **231**, score evaluation module **233**, aggregation module **235**, session monitoring module **237** and other modules **239**. The other modules **239** may be used to perform various miscellaneous functionalities of the requirement determination system **107**. It will be appreciated that such aforementioned modules **205** may be represented as a single module or a combination of different modules.

In some embodiments, the session invitation module **223** may send the session invite to the one or more computing devices **105** associated with the one or more end users **103**. The session invite corresponds to the session to determine requirements for the project. Upon sending the session invite to the one or more computing devices **105**, the processor **109** may trigger the detecting module **225**.

In some embodiments, the detecting module **225** may detect availability of the one or more end users **103** through the one or more computing devices **105** for participating in the session. The process of requirements determination starts when the one or more computing devices **105** join the session upon receiving the session invite. The one or more computing devices **105** may join the session at any time of convenience of the one or more end users **103**. In some embodiments, the detecting module **225** may be available at any given point of time to detect the availability of the one or more end users **103** when the one or more computing devices **105** join the session and start the process of requirements determination. The process of requirements determination is a one-to-one interaction with each of the one or more end users **103** detected by the detecting module **225**. If more than one end user **103** is detected at a given point of time, the process of requirements determination starts a separate one-to-one interaction simultaneously with each of the one or more end users **103** detected.

In some embodiments, the questions providing module **227** may provide the one or more predefined questions to the one or more computing devices **105** upon detecting the one or more end users **103** by the detecting module **225**. When the one or more end users **103** are detected, the questions providing module **227** may traverse through the one or more predefined requirement targets to formulate questions related to the one or more predefined requirement targets. Thereafter, the questions providing module **227** may provide questions to the one or more computing devices **105** associated with the one or more end users **103**. The one or more predefined questions are associated with the one or more predefined requirement targets and they are provided to the one or more computing devices **105** to complete each of the one or more predefined requirement targets. The one or more end users **103** may be participating in the session afresh or may be resuming the session from prior participation. In some embodiments, if the one or more end users **103** are participating in the session afresh, the questions providing module **227** may select each of the one or more predefined requirement targets sequentially to provide the one or more questions. In some other embodiment, if the one or more end users **103** are resuming from the prior participation in the session, the questions providing module **227** may select the one or more predefined requirement targets that are marked incomplete from the prior participation in the session. The questions providing module **227** may provide one or more predefined questions corresponding to the one or more predefined requirement targets that are marked incomplete. The questions providing module **227** may provide the one or more predefined questions to the one or more computing devices **105** one by one only upon receiving the one or more responses for each of the one or more predefined questions provided. The one or more end users **103** may request the questions providing module **227** to elaborate or reiterate the one or more predefined questions if they encounter difficulty in understanding the one or more predefined questions. In some embodiments, the format conversion module **228** may convert the one or more predefined questions present in text format into audio format. Upon converting the text format into the audio format, the questions providing module **227** may provide the audio format of the one or more predefined questions to the one or more computing devices **105**. Upon providing the one or more questions to the one or more computing devices **105**, the processor **109** may trigger the receiving module **229**.

In some embodiments, the response receiving module **229** may receive the one or more responses for each of the one or more predefined questions provided by the questions providing module **227**. The one or more responses received for open ended questions may be in terms of a free text. The one or more responses received for closed ended questions may be in terms of "Yes" or "No". The one or more responses received for value based questions may be in terms of a specific value. The receiving module **229** may receive the one or more responses from the one or more computing devices **105** in the audio format. The format conversion module **228** may convert the one or more responses received in the audio format to the text format. Upon conversion of the one or more responses in the audio format to the text format, the processor **109** may trigger the response analysing module **230**.

In an embodiment, the response analysing module **230** may analyze the one or more responses received from the one or more computing devices **105**. If the one or more predefined questions provided were closed ended questions, the response analysing module **230** may analyze the one or more responses to check whether they correspond to either "Yes" or "No". Further, if the one or more predefined questions provided were value based questions, the response analysing module **230** may analyze the one or more responses to check whether they correspond to a specific value. Furthermore, if the one or more predefined questions provided were open ended questions, the response analysing module **230** may analyze the one or more responses to check whether they correspond to a free text. Upon receiving the free text, the response analysing module **230** performs various levels of analysis to check for completeness, ambiguity detection, specificity etc. The response analysing module **230** may request the one or more end users **103** to elaborate or reiterate the one or more responses if a difficulty is encountered in understanding the one or more responses of the one or more end users **103**. Upon analysing the one or more responses, the processor **109** may trigger the scoring module **231**.

In some embodiments, the scoring module **231** may assign a score to each of the one or more responses received from the one or more computing devices **105**. The score is assigned to each of the one or more responses to understand the extent to which each of the one or more responses contribute towards completing the one or more predefined requirement targets. Further, the score assigned to each of the one or more responses detects relevancy of the one or more responses to the one or more predefined questions i.e. to detect whether the one or more responses belong to context of the one or more predefined questions. As an example, if the one or more end users **103** receive a call during the session, the one or more responses received may be related to the end user's conversation over his computing device **105** and not related to the one or more predefined questions provided. Therefore, the score assigned to such one or more responses help in detecting that the one or more responses are not relevant to the one or more predefined questions.

In some embodiments, the scoring module **231** may assign the score to each of the one or more responses based on the one or more content-based parameters which in a non-limiting embodiment are the level of details and the clarity of content in the one or more responses. The one or more responses may be represented in four quadrants as shown in the **FIG.2C**. In the **FIG.2C**, X-axis **241a** indicates the content-based parameter "the level of details" and Y-axis **241b** indicates the content-based parameter "clarity of content". Further, in the **FIG.2C**, first quadrant of the four quadrants comprises the one or more responses having high clarity of content and low level of details, second quadrant of the four quadrants comprises the one or more responses having high clarity of content and high level of details, third quadrant of the four quadrants comprises the one or more responses having low clarity of content and low level of details and fourth quadrant of the four quadrants comprises the one or more responses having low clarity of content and high level of details. The objective of representing the one or more responses in the four quadrants may be to ensure that the one or more responses collected move from the third quadrant (Low clarity of content and low level of details) towards the second quadrant (High clarity of content and high level of details). The score assigned to each of the one or more responses is directly proportional to the movement of the one or more responses from the third quadrant towards the second quadrant. Upon assigning the score and representing each of the one or more responses in the four quadrants, the processor **109** triggers the score evaluation module **233**.

In some embodiments, the score evaluation module **233** may detect whether the one or more predefined requirement targets are complete. The score assigned to each of the one or more responses corresponding to each of the one or more predefined questions of each of the one or more predefined requirement targets are compared with the corresponding unique predefined threshold score assigned to each of the one or more predefined requirement targets. The unique predefined threshold score may be determined based on depth of the tree representing the one or more predefined requirement targets. As an example, if depth of the tree representing a predefined requirement target comprising 10 levels, then the predefined requirement target may be considered to be complete i.e. the predefined requirement target may be achieved if minimal traversal is up to 80%. Therefore, the unique predefined threshold score of the predefined requirement target is configured as 80%. Based on the comparison, the one or more predefined requirement targets are determined to be complete if the score assigned to each of the one or more responses is at least one of equal to or exceeding the corresponding unique predefined threshold score. Similarly, the one or more predefined requirement targets are determined to be incomplete if the score assigned to each of the one or more responses is less than the corresponding unique predefined threshold score. If the one or more predefined requirement targets are determined to be complete, then the processor **109** may trigger the response aggregation module **235**. If the one or more predefined requirement targets are determined to be incomplete, then the processor **109** may trigger the questions providing module **227** to provide one or more predefined questions to the one or more computing devices **105** and may further trigger the format conversion module **228**, the receiving module **229**, the scoring module **231** and the score evaluation module **233** to re-iterate their functionalities until each of the one or more predefined requirement targets are determined to be complete.

In some embodiments, the aggregation module **235** may aggregate the one or more responses for determining the one or more requirements of the project upon determining the completion of each of the one or more predefined requirement targets. The aggregation module **235** first categorizes the one or more responses into respective topics and sub-topics of the corresponding one or more predefined requirement targets and the one or more predefined sub-requirement targets. Upon categorizing the one or more responses, the aggregation module **235** may aggregate each of the one or more responses received from each of the one or more end users **103** of the common topic and sub-topics based on the one or more aggregation-based parameters. As an example, the one or more aggregation-based parameters may include, but not limited to, designation of the one or more end users **103**, vocal tone of the one or more end users **103** and vocabulary of the one or more end users **103**. As an example, consider the aggregation module **235** may encounter one or more contradictory responses while aggregating the one or more responses. In such scenario, if the one or more contradictory responses belong to one or more end users **103** of different designations, then the one or more responses of the end user **103** with the highest designation may be given priority over rest of the one or more responses. Further, as an example, if the one or more contradictory responses belong to one or more end users **103** of the same designation, then the one or more responses of the end user **103** having a determined and steady tone and vocabulary of the end user **103** comprising words such as "must", "should" etc. may be given the priority. Upon aggregating the one or more responses, the aggregated responses are presented to the one or more end users **103** for confirmation. Upon receiving confirmation of each of the one or more end users **103**, the aggregated one or more responses are determined and recorded as the one or more requirements of the project. Upon determining the one or more requirements of the project, the processor **109** may trigger the session monitoring module **237**.

In some embodiments, the session monitoring module **237** may monitor and perform necessary actions related to the session. Upon completion of the one or more predefined requirement targets and determining the one or more requirements of the project, the session monitoring module **237** may inform the one or more end users **103** and terminates the session. Further, the session monitoring module **237** records the time at which the session started. If the session time exceeds the predefined time period, then the session monitoring module **237** informs the user and terminates the session. This condition may occur when the user is inactive for a period of time after the session has started, when the user takes more time to respond to the one or more predefined questions etc. If the session monitoring module **237** terminates the session due to the session time exceeding the predefined time period, the one or more predefined targets completed till the end of the session are recorded. When the one or more end users **103** resumes the session, the session monitoring module **237** ensures that the process continues from the point where the session ended.

### Scenario-1

Consider an exemplary scenario for the project- online application of demand draft in a bank. The one or more predefined requirement targets and the one or more predefined sub-requirement targets defined for the project are shown in the below **Table 1**.

**Table 1**

| **Predefined Requirement Targets (RT)** | **Predefined Sub-Requirement Targets (SRT)** |
|---|---|
| RT 1. Target customers | SRT 1. Who is a target customer? |
| RT 2. Authentication mechanism | SRT 1. What is the mechanism for authentication? |
| | SRT 2. What if the authentication fails? |
| RT 3. Input details required | SRT 1. What input details are required? |
| | SRT 2. What if the details are not filled? |
| RT 4. Input validation | SRT 1. What is the minimum transaction value? |
| | SRT 2. What if the amount is less than minimum transaction value? |
| | SRT 3. What is the minimum balance for the user to apply for a demand draft? |
| | SRT 4. What are the other Pre-requisites for a user to apply for a DD? |
| RT 5. Payment mechanism | SRT 1. What mode of payment would be allowed? |
| | SRT 2. What if the supported mode of payment is not available? |
| RT 6. Fund management | SRT 1. When should the user amount be debited once the all validations are successful? |
| | SRT 2. To which account should the debited amount be moved to. |

The requirement determination system **107** may comprise representations in a tree data structure form (also referred to as tree representation) of the one or more predefined requirement targets and the one or more predefined sub-requirement targets mentioned in the above **Table 1**. Primary node of the tree data structure form represents the predefined requirement target and sub-nodes/child nodes of the tree data structure form represents the predefined sub-requirement targets of the predefined requirement target. The requirement determination system **107** sends the session invite to the one or more end users **103**. Consider end user **103₁** joins the session via the computing device **105₁**.

When the session starts, the requirement determination system **107** selects a predefined requirement target. Consider the predefined requirement target selected by the requirement determination system **107** is "Authentication mechanism". The tree representation of the predefined requirement target "Authentication mechanism" is shown in the **FIG.2D**. The tree representation of the predefined requirement target "Authentication mechanism" comprises 4 levels. Upon selecting the predefined requirement target, the requirement determination system **107** provides an open ended question "what would be the mechanism of authentication for the online application of demand draft" associated with the predefined requirement target "Authentication mechanism" to the computing device **105₁**. Upon providing the question, the response received from the end user **103₁** is "we would prefer One Time Password (OTP) based Authentication". Since the predefined question was of the type "Open ended question", the requirement determination system **107** analyzes the free text received as the response based on the tree representation of the predefined requirement target "Authentication Mechanism".

Upon analysing, the requirement determination system **107** identifies key concept "OTP" from the free text. As the "OTP" identified in the response is detected in first level of the tree representation, the clarity of content is high. However, the level of details is low as various details related to "OTP" such as communication channel i.e. electronic device to which the "OTP" should be sent and Life of "OTP" i.e. time period for which the "OTP" should be active are not addressed by the response received. The requirement determination system **107** assigns a score to the response received based on the clarity of content and the level of details in the response. The key concept identified i.e. "OTP" is present in the first level of the tree representation whose total depth is 4. Further, as there are no details shared regarding the Life of the "OTP" or the "communication channel" which are defined in further levels of the tree representation, the current level at which the key concepts are identified is divided by the total depth of the tree. Therefore, the score assigned to the response is 1/4 = 25%. Consider that the unique predefined threshold score of the predefined requirement target "Authentication mechanism" is 100%. Therefore, the requirement determination system **107** provides predefined questions to the computing device **105₁** until the unique predefined threshold score is reached. The requirement detection system **107** provides a second question "what is the preferred means of OTP validation". Upon providing the question, the response received from the end user **103₁** is "we would like to send the "OTP" to user's mobile phone". Since the predefined question was of the type "Open ended question", the requirement determination system **107** analyzes the free text received as the response based on the tree representation of the predefined requirement target "Authentication Mechanism". Upon analysing, the requirement determination system **107** identifies key concept as "Mobile phone" which is present in third level of the tree representation. Therefore, the clarity of content is high though the level of details is medium as details related to the Life of "OTP" is not addressed by the response received. The requirement determination system **107** assigns a score to the response received based on the clarity of content and the level of details in the response. The current level of the key concept "mobile phone" present in the tree representation is divided by the total depth of the tree. Therefore, the score assigned to the response is 3/4 = 75%. Since the score assigned has not reached the unique predefined threshold score, the requirement determination system **107** provides predefined questions to the computing device **105₁** until the unique predefined threshold score is reached.

The requirement detection system **107** provides a third question "what is the preferred life of OTP". Upon providing the question, the response received from the end user **103₁** is "Life of OTP should be 15 minutes". Since the predefined question was of the type "value specific question", the requirement determination system **107** analyzes the free text to detect a value. Upon analysing, the requirement determination system **107** identifies the value as "15 minutes" which is Life of "OTP" present in fourth level of the tree representation. Therefore, the clarity of content and the level of details are high as all details related to "OTP" are covered. The requirement determination system **107** assigns a score to the response received based on the clarity of content and the level of details in the response. The current level of the key concept "15 minutes" present in the tree representation is divided by the total depth of the tree. Therefore the score assigned to the response is 4/4 = 100%. Since the score assigned has reached the unique predefined threshold score, the requirement determination system **107** determines the predefined requirement target "Authentication mechanism" to be complete and hence aggregates the one or more responses as shown below.
Authentication Mechanism: OTP
OTP device: Mobile Phone
Life of OTP: 15 minutes

Upon aggregating the one or more responses, the requirement determination system **107** presents the aggregated one or more responses to the end user **103₁** for confirmation. Upon receiving confirmation from the end user **103₁**, the aggregated one or more responses are stored as the one or more requirements of the project. The requirement determination system **107** now proceeds to the next predefined requirement target in the same session.

Consider the end user **103₁** had provided a response for the first question "what would be the mechanism of authentication for the online application of demand draft" as "we want the authentication mechanism to be via "OTP" which should be sent to the user's mobile phone. Also we want to ensure that the life of "OTP" expires within 15 minutes for security reasons". In the above response, the clarity of content is high and also the level of details is high as it covers all details related to "OTP". Therefore, the response has covered all the nodes as initially defined in the tree representation and hence the score assigned to the response is 4 / 4 = 100%, thereby completing the predefined requirement target "Authentication mechanism" in just one question.

Consider a case where the one or more responses are received from more than one end user such as end user **103₁**, end user **103₂** and end user **103₃** as shown in the below **Table 2**. Further, consider that relative importance of the end users **103** is in an order of end user **103₂**, the end user **103₃** and the end user **103₁**.

**Table 2**

| Question | Response of end user **103₁** | Response of end user **103₂** | Response of end user **103₃** |
|---|---|---|---|
| Question 1. | Response 1. | Response 1. | Response 1. |
| What would be the mechanism of authentication for the online application of demand draft | OTP | OTP | OTP |
| Question 2. | Response 2. | Response 2. | Response 2. |
| What is the preferred means of "OTP" validation | I would like to send the "OTP" to user's mobile phone | I would like to send the "OTP" to user's e-mail. | I would like to send the "OTP" to user's e-mail. |
| Question 3. | Response 3. | Response 3. | Response 3. |
| What is the preferred life of "OTP" | 7 minutes | 15 minutes | 12 minutes |

According to the above **Table 2**, consider the predefined requirement target "Authentication mechanism" has been completed for the end user **103₁**, the end user **103₂** and the end user **103₃**. The requirement generation system **107** aggregates the one or more responses received from the end user **103₁**, end user **103₂** and end user **103₃** to determine one or more requirements of the project. Since, the end user **103₁**, the end user **103₂** and the end user **103₃** have provided the response as "OTP" for question 1, the requirement generation system **107** records "Authentication mechanism: OTP" as one of the requirements. Further, while aggregating the one or more responses of the end user **103₁**, the end user **103₂** and the end user **103₃** for the question 2, the requirement determination system **107** encounters contradictory responses i.e. uniformity in the one or more responses is not observed. Therefore, the requirement determination system **107** gives priority to the end user **103** having highest relative importance. Based on the order of the relative importance as mentioned above, the end user **103₂** has the highest relative importance. Therefore, the response 2 of the end user **103₂** "I would like to send the "OTP" to user's e-mail" is recorded as one of the requirements of the project. Similarly, for the question 3, the response 3 "Life of OTP: 15 minutes" of the end user **103₂** is recorded as one of the requirements of the project.

In case, the one or more end users **103** are not the correct persons to respond to a certain question, the one or more end users **103** may respond "I'm not the right person to answer this question". The requirement determination system **107** may skip that question and proceed to the next question. Alternatively, the requirement determination system **107** may ask for reference of the correct person to answer the question from the one or more end users **103**. In such a situation, the predefined requirement target may be considered to be complete only after the reference person joins the session and responds to the question.

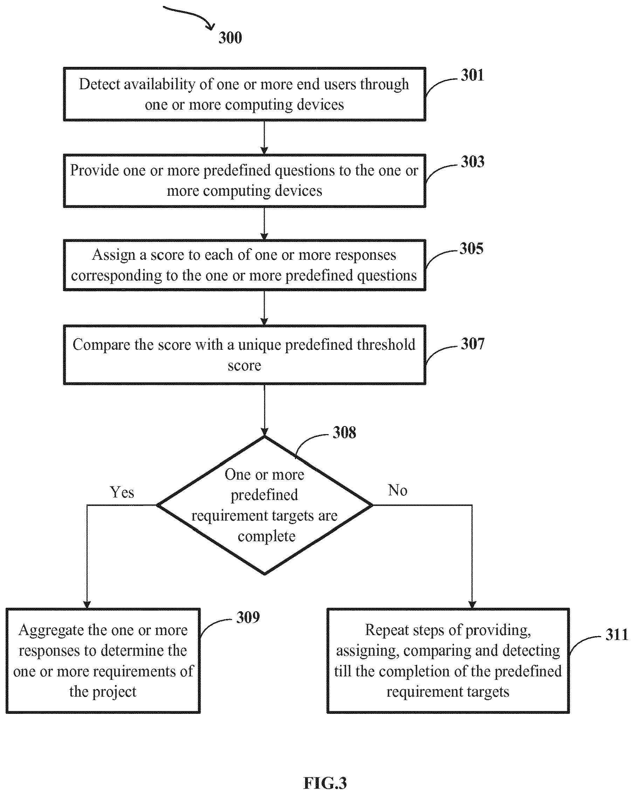

**FIG.3** shows a flowchart illustrating a method for determining one or more requirements for a project in accordance with some embodiments of the present disclosure.

As illustrated in **Fig.3**, the method **300** comprises one or more blocks illustrating a method for determining one or more requirements for a project. The method **300** may be described in the general context of computer executable instructions. Generally, computer executable instructions can include routines, programs, objects, components, data structures, procedures, modules, and functions, which perform functions or implement abstract data types.

The order in which the method **300** is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At **block 301**, availability of one or more end users **103** is detected through the one or more computing devices **105** for participating in the session. The one or more computing devices **105** are associated with the one or more end users **103**. In some embodiments, the processor **109** of the requirement determination system **107** sends the session invite to the one or more computing devices **105**. The session invite corresponds to the session for requirements determination of the project. The processor **109** may detect the availability of the one or more end users **103** when the one or more computing devices **105** join the session.

At **block 303**, one or more predefined questions are provided to the one or more computing devices **105** upon detecting the one or more end users **103**. The one or more predefined questions are associated with one or more predefined requirement targets of the project. The processor **109** may provide the one or more predefined questions to the one or more computing devices **105** one by one only upon receiving the one or more responses for each of the one or more predefined questions provided. The processor **109** may convert the one or more predefined questions present in text format into audio format and provides the audio format of the one or more predefined questions to the one or more computing devices **105**.

At **block 305**, a score is assigned to each of one or more responses received from the one or more computing devices **105** in response to the one or more predefined questions provided. In some embodiments, the processor **109** first receives the one or more responses from the one or more computing devices **105** in the audio format. Further, the processor **109** converts the one or more responses received in the audio format to the text format and assigns the score to each of the one or more responses in the text format based on one or more content-based parameters. As an example, the one or more content-based parameters may include, but not be limited to, the level of details and the clarity of content in the one or more responses.

At **block 307**, the score assigned to each of the one or more responses is compared with a unique predefined threshold score. In some embodiments, the processor **109** detects whether the one or more predefined requirement targets are complete based on the comparison. The one or more predefined requirement targets are determined to be complete if the score assigned to each of the one or more responses is at least one of equal to or exceeding the corresponding unique predefined threshold score. Similarly, the one or more predefined requirement targets are determined to be incomplete if the score assigned to each of the one or more responses is less than the corresponding unique predefined threshold score.

At **block 308**, a condition is checked to see if the one or more predefined requirement targets are complete. If the one or more predefined requirement targets are determined to be complete, then the method proceeds to **block 309** via "Yes". If the one or more predefined requirement targets are determined to be incomplete, then the method proceeds to **block 311** via "No".

At **block 309**, the one or more responses are aggregated for determining the one or more requirements of the project. The processor **109** may categorize the one or more responses into respective topics and sub-topics of the corresponding one or more predefined requirement targets and the one or more predefined sub-requirement targets. Upon categorizing the one or more responses, the processor **109** may aggregate each of the one or more responses received from each of the one or more end users **103** based on the common topic and sub-topics. In some embodiments, if the processor **109** encounters conflicting situations due to the one or more contradictory responses of the one or more end users **103**, the aggregation module **235** may aggregate the one or more contradictory responses based on the one or more aggregation-based parameters. As an example, the one or more aggregation-based parameters may include, but not limited to, designation of the one or more end users **103**, vocal tone of the one or more end users **103** and vocabulary of the one or more end users **103**. Upon aggregating the processor **109** presents the aggregated responses to the one or more end users **103** for confirmation. Upon receiving confirmation of each of the one or more end users **103**, the aggregated one or more responses are determined and recorded as the one or more requirements of the project.

At **block 311**, the steps of providing the one or more predefined questions, assigning the score to each of the one or more responses, comparing the score with the unique predefined threshold score and detecting completion of the one or more predefined requirement targets may be repeated until the completion of each of the one or more predefined requirement targets.

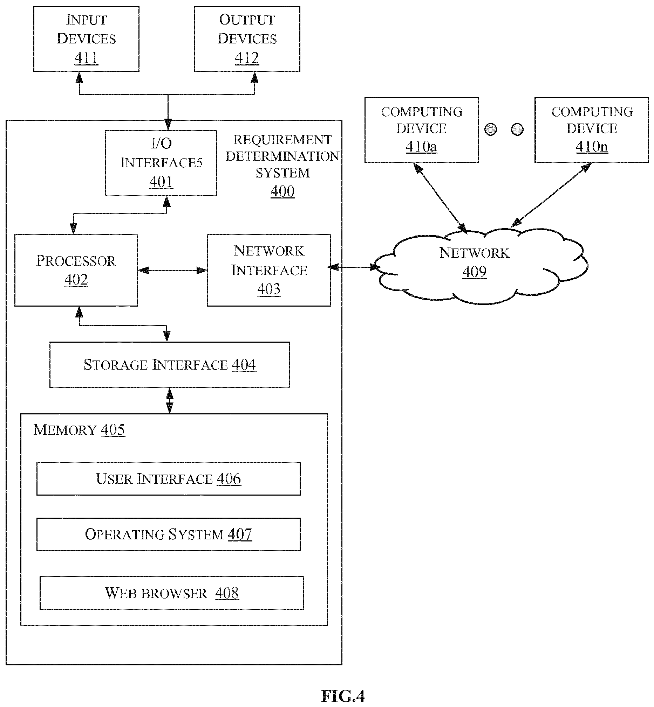

**FIG.4** is a block diagram of an exemplary computer system for implementing embodiments consistent with the present disclosure.

In an embodiment, the requirement determination system **400** is used for determining one or more requirements for a project. The requirement determination system **400** may comprise a central processing unit ("CPU" or "processor") **402**. The processor **402** may comprise at least one data processor for executing program components for executing user- or system-generated processes. A user may include a person, a person using a device such as such as those included in this invention, or such a device itself. The processor **402** may include specialized processing units such as integrated system (bus) controllers, memory management control units, floating point units, graphics processing units, digital signal processing units, etc.

The processor **402** may be disposed in communication with one or more input/output (I/O) devices (**411** and **412**) via I/O interface **401**. The I/O interface **401** may employ communication protocols/methods such as, without limitation, audio, analog, digital, stereo, IEEE-1394, serial bus, Universal Serial Bus (USB), infrared, PS/2, BNC, coaxial, component, composite, Digital Visual Interface (DVI), high-definition multimedia interface (HDMI), Radio Frequency (RF) antennas, S-Video, Video Graphics Array (VGA), IEEE 802.n /b/g/n/x, Bluetooth, cellular (e.g., Code-Division Multiple Access (CDMA), High-Speed Packet Access (HSPA+), Global System For Mobile Communications (GSM), Long-Term Evolution (LTE), WiMax, or the like), etc.

Using the I/O interface **401**, the requirement determination system **400** may communicate with one or more I/O devices (**411** and **412**).

In some embodiments, the processor **402** may be disposed in communication with a communication network **409** via a network interface **403**. The network interface **403** may communicate with the communication network **409**. The network interface **403** may employ connection protocols including, without limitation, direct connect, Ethernet (e.g., twisted pair 10/100/1000 Base T), Transmission Control Protocol/Internet Protocol (TCP/IP), token ring, IEEE 802.11a/b/g/n/x, etc. Using the network interface **403** and the communication network **409**, the requirement determination system **400** may communicate with one or more computing devices **410 (a,..,n).** The communication network **409** can be implemented as one of the different types of networks, such as intranet or Local Area Network (LAN) and such within the organization. The communication network **409** may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the communication network **409** may include a variety of network devices, including routers, bridges, servers, computing devices, storage devices, etc. The one or more computing devices **410 (a,...,n)** may include, but not limited to, a mobile, a tablet, an e-book reader, a notebook, a laptop, a server and a desktop. The one or more computing devices **410 (a,....,n)** may be associated with one or more stake holders of an organization. In some embodiments, the processor **402** may be disposed in communication with a memory **405** (e.g., RAM, ROM, etc. not shown in **Fig.4**) via a storage interface **404**. The storage interface **404** may connect to memory **405** including, without limitation, memory drives, removable disc drives, etc., employing connection protocols such as Serial Advanced Technology Attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory **405** may store a collection of program or database components, including, without limitation, user interface application **406**, an operating system **407**, web browser **408** etc. In some embodiments, the requirement determination system **400** may store user/application data, such as the data, variables, records, etc. as described in this invention. Such databases may be implemented as fault-tolerant, relational, scalable, secure databases such as Oracle or Sybase.

The operating system **407** may facilitate resource management and operation of the requirement determination system **400**. Examples of operating systems include, without limitation, Apple Macintosh OS X, UNIX, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), International Business Machines (IBM) OS/2, Microsoft Windows (XP, Vista/7/8, etc.), Apple iOS, Google Android, Blackberry Operating System (OS), or the like. User interface **406** may facilitate display, execution, interaction, manipulation, or operation of program components through textual or graphical facilities. For example, user interfaces may provide computer interaction interface elements on a display system operatively connected to the requirement determination system **400**, such as cursors, icons, check boxes, menus, scrollers, windows, widgets, etc. Graphical User Interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the requirement determination system **400** may implement a web browser **408** stored program component. The web browser **408** may be a hypertext viewing application, such as Microsoft Internet Explorer, Google Chrome, Mozilla Firefox, Apple Safari, etc. Secure web browsing may be provided using Secure Hypertext Transport Protocol (HTTPS) secure sockets layer (SSL), Transport Layer Security (TLS), etc. Web browsers may utilize facilities such as AJAX, DHTML, Adobe Flash, JavaScript, Java, Application Programming Interfaces (APIs), etc. In some embodiments, the requirement determination system **400** may implement a mail server stored program component. The mail server may be an Internet mail server such as Microsoft Exchange, or the like. The mail server may utilize facilities such as Active Server Pages (ASP), ActiveX, American National Standards Institute (ANSI) C++/C#, Microsoft .NET, CGI scripts, Java, JavaScript, PERL, PHP, Python, WebObjects, etc. The mail server may utilize communication protocols such as Internet Message Access Protocol (IMAP), Messaging Application Programming Interface (MAPI), Microsoft Exchange, Post Office Protocol (POP), Simple Mail Transfer Protocol (SMTP), or the like. In some embodiments, the requirement determination system **400** may implement a mail client stored program component. The mail client may be a mail viewing application, such as Apple Mail, Microsoft Entourage, Microsoft Outlook, Mozilla Thunderbird, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, non-volatile memory, hard drives, Compact Disc (CD) ROMs, Digital Video Disc (DVDs), flash drives, disks, and any other known physical storage media.

Advantages of embodiments of the present disclosure are set out in the following paragraphs.

In an embodiment, the present disclosure provides a method and a system for determining one or more requirements for a project.

The present disclosure provides a feature wherein the requirement determination system provides one or more questions to end users based on predefined requirement targets to receive responses from the end users. Therefore, the present disclosure follows a structured and a disciplined method of determining requirements using artificial intelligence.

The present disclosure provides a feature wherein the requirement determination system is available at any point of time to interact with the end users based on their availability and convenience, thereby providing significant flexibility to end users who are geographically distributed.

The present disclosure provides a feature wherein one-to-one interaction with the end users which ensures privacy and equal importance to each end user.

The present disclosure provides a feature wherein the requirement determination session can have the one-to-one interaction with more than one end user simultaneously.

A description of an embodiment with several components in communication with each other does not imply that all such components are required. On the contrary a variety of optional components are described to illustrate the wide variety of possible embodiments of the invention.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The specification has described a method and a system for determining one or more requirements for a project. The illustrated steps are set out to explain the exemplary embodiments shown, and it should be anticipated that on-going technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the embodiments of the present invention are intended to be illustrative, but not limiting, of the scope of the invention, which is set forth in the following claims.

## Claims

1. A method for determining one or more requirements for a project, the method comprising:
detecting, by a requirement determination system (**107**), availability of one or more end users (**103**) through one or more computing devices (**105**) for participating in a session related to requirements determination for a project, wherein the one or more computing devices (**105**) are associated with the one or more end users (**103**);
providing, by the requirements determination system (**107**), one or more predefined questions associated with one or more predefined requirement targets of the project to the one or more computing devices (**105**) upon detecting the availability of the one or more end users (**103**);
assigning, by the requirement determination system (**107**), a score to each of one or more responses received from the one or more computing devices (**105**) in response to the one or more predefined questions based on one or more content-based parameters;
comparing, by the requirement determination system (**107**), the score assigned to each of the one or more responses with a unique predefined threshold score associated with each of the one or more predefined requirement targets;
detecting, by the requirement determination system (**107**), completion of the one or more predefined requirement targets based on the comparison; and
aggregating, by the requirement determination system (**107**), the one or more responses received from the one or more computing devices (**105**) for determining one or more requirements of the project based on one or more aggregation-based parameters upon detecting the completion of the one or more predefined requirement targets.

2. The method as claimed in claim 1, further comprising repeating the steps of providing, assigning, comparing and detecting until the completion of the one or more predefined requirement targets when the one or more predefined requirement targets are incomplete.

3. The method as claimed in claim 1 or claim 2, wherein the availability of the one or more end users (**103**) is detected when the one or more computing devices (**105**) joins the session in response to a session invite sent by the requirements determination system (**107**) to the one or more computing devices (**105**).

4. The method as claimed in any of the preceding claims, wherein the one or more predefined requirement targets are determined to be complete when the score assigned to each of the one or more responses is at least one of equal to or exceeding the unique predefined threshold score.

5. The method as claimed in any of the preceding claims, wherein the one or more predefined requirement targets comprises one or more predefined sub- requirement targets.

6. The method as claimed in any of the preceding claims, wherein the one or more content-based parameters comprises at least one of level of details and clarity of content in the one or more responses.

7. The method as claimed in any of the preceding claims, wherein the one or more aggregation-based parameters comprises at least one of designation of the one or more end users (**103**), vocal tone of the one or more end users (**103**) and vocabulary of the one or more end users (**103**).

8. The method as claimed in any of the preceding claims, further comprising providing, by the requirement determination system (**107**), the one or more requirements of the project to the one or more computing devices (**105**).

9. The method as claimed in any of the preceding claims, further comprising deactivating, by the requirement determination system (**107**), the session when at least one of:
the session exceeds a predefined time period; and
each of the one or more predefined requirement targets are determined to be complete.

10. The method as claimed in any of the preceding claims, further comprising detecting, by the requirement determination system (**107**), relevancy of the one or more responses to the one or more predefined questions based on the score assigned to each of the one or more responses.

11. The method as claimed in any of the preceding claims, wherein the one or more predefined questions comprises at least one of open ended questions, closed ended questions and value based questions.

12. The method as claimed in any of the preceding claims, further comprising requesting, by the requirement determination system (**107**), the one or more end users (**103**) to at least one of re-iterate the response and elaborate the response.

13. A requirement determination system (**107**) for determining one or more requirements for a project, the requirement determination system (**107**) comprising:
a processor (**109**); and
a memory (**113**) communicatively coupled to the processor (**109**), wherein the memory (**113**) stores the processor-executable instructions, which, on execution, causes the processor (**109**) to perform the method of any of the preceding claims.

14. A non-transitory computer readable medium including instructions stored thereon that when processed by at least one processor (**109**) causes a requirement determination system (**107**) to perform the method of any of claims 1 to 12.
